(19) Europäisches Patentamt
European Patent Office
Office européen des brevets

(11) **EP 2 180 757 B1**

(12) **EUROPEAN PATENT SPECIFICATION**

(45) Date of publication and mention
of the grant of the patent:
**10.02.2016 Bulletin 2016/06**

(51) Int Cl.:
**H04B 1/7143** *(2011.01)*   **H04W 72/04** *(2009.01)*

(21) Application number: **07785307.5**

(86) International application number:
**PCT/CN2007/002402**

(22) Date of filing: **10.08.2007**

(87) International publication number:
**WO 2009/021348 (19.02.2009 Gazette 2009/08)**

(54) **METHOD FOR ALLOCATING RESOURCE OF MOBILE USER AND RESOURCE ALLOCATING DISPATCHER USING SUCH POLICY**

VERFAHREN ZUM VERGEBEN EINES BETRIEBSMITTELS EINES MOBILBENUTZERS UND EINE SOLCHE RICHTLINIE VERWENDENDER BETRIEBSMITTEL VERGEBENDER DISPATCHER

PROCÉDÉ D'ATTRIBUTION DE RESSOURCES D'UN UTILISATEUR ITINÉRANT ET RÉPARTITEUR D'ATTRIBUTION DE RESSOURCES UTILISANT CETTE POLITIQUE

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**28.04.2010 Bulletin 2010/17**

(73) Proprietor: **ALCATEL LUCENT**
**92100 Boulogne-Billancourt (FR)**

(72) Inventors:
• **ZHU, Xudong**
**Shanghai 201206 (CN)**
• **YOU, Mingli**
**388 Ningqiao RD, Shanghai (CN)**

(74) Representative: **Wetzel, Emmanuelle et al**
**Alcatel Lucent**
**Intellectual Property & Standards**
**70430 Stuttgart (DE)**

(56) References cited:
WO-A1-96/02980     CA-A1- 2 537 395
CN-A- 1 054 517     CN-A- 1 327 643
JP-A- 10 209 922     US-A- 5 581 548
US-A- 5 848 095     US-A1- 2005 190 868
US-A1- 2006 039 318

**Description**

**Field of the Invention**

The present invention relates to a mobile communication field, and especially, to a method for allocating mobile user resource and a resource allocation scheduler using the same.

**Background of the Invention**

In an E-UTRAN system, frequency-selective (FS) scheduling through exploitation of channel condition is one of the main technologies in distributed dynamic radio resource radio resource management. However, large fluctuation of SIR (Signal to Interference Ratio) may be caused due to lacking knowledge of instant inter-cell co-channel interference, thereby infecting implementations of the radio link adaptation technologies.

In addition, in order to achieve reasonable cell edge performance and good fairness among users, the FS scheduling will also have to allocate more bandwidths to those cell-edge users in the severe inter-cell interference situation. This will degrade the bandwidth efficiency and thus the whole cell performance.

A scheme with reasonable complexity to handle with the inter-cell interference is important even when the FS scheduling is applied in an uplink of E-UTRAN. The FS scheduling may not be applicable in E-UTRAN due to channel estimation accuracy and application requirements in some scenarios such as when users are in high mobility and/ or when real-time services such as VOIP (Voice over Internet Protocol) are transported and etc.

Therefore, the FH (Frequency Hopping) scheme is an alternative candidate to achieve the frequency diversity gain in multi-path frequency-selective channel as complimentary to FS scheduling especially for those situations where the FS scheduling is not applicable.

In the FH scheme, a UE (User Equipment) will be allocated discontinuous frequency resource according to a predefined pattern. By using the FH, it can reduce multi-path interference and avoid deep fading in wireless communication. Therefore, the frequency diversity gain can be achieved on a link layer.

US 5,581,548 describes methods of frequency and channel hopping in a TDMA cellular mobile radio system. In a system using six radio channels, each having three time slots per frame, 18 different connections are used. No connection is assigned the same radio channel and time slot in succeeding frames of the radio channel.

CA 2 537 395 A1 describes a frequency hopping communication system, wherein two subband signals are allocated to new frequency positions at subsequent time moments, wherein the new frequency positions are selected pseudo-randomly, with the limitation that frequency-hopping subbands cannot overlap at any moment in time.

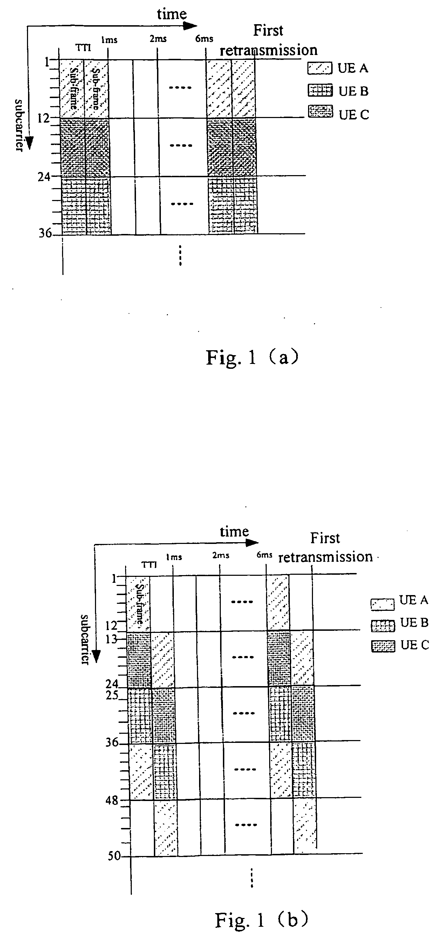

Fig. 1(a) illustrates a normal RU (Resource Unit) allocation without frequency hopping for three users, UE A, UE B and UE C. As shown in Fig. 1(a), each UE is allocated one RU with 12 sub-carriers per TTI, and each TTI contains two sub-frames, which are called a first sub-frame and a second sub-frame respectively. In a case without frequency hopping, the first sub-frame and the second sub-frame use the same frequency band. The "first retransmission" as shown in Fig. 1(a) refers to a retransmission of Hybrid ARQ (Automatic Repeat Request). Since it is advised to use fixed non-adaptive retransmission patterns in the current radio standardization organization 3GPP, resource locations for retransmission (time versus frequency) are fixed, as shown in Fig. 1(a).

Fig. 1(b) illustrates a case with intra-TTI frequency hopping. Here, a distance in term of RU number between the first sub-frame and the second sub-frame within the same TTI is defined as a frequency hopping distance $D_{th}$. The frequency hopping pattern is a critical factor to affect the interference.

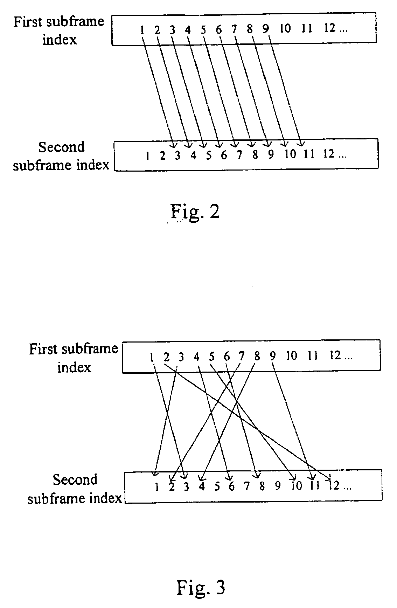

There is no scheme of FH pattern design that considers system level performance, so currently, a constant frequency hopping is applied, which is described in Fig. 2.

As illustrated in Fig. 2, a set of indices of the first sub-frame are set as $S_{1st}$ = {*firstIdx* |1, 2, 3, 4, ···.}, which is consisted of sub-frame indices, and a set of indices of the second sub-frame is set as $S_{2nd}$= { *SecondIdx* | 1, 2, 3, 4, ···. }. When the frequency hopping scheme is applied, each UE will be allocated a resource indicator as a pair of a first sub-frame index and a second sub-frame index, {*firstIdx*, *SecondIdx*}. According to the FH pattern, the value of *SecondIdx* can be calculated by the following equation:

$$SecondIdx = \text{mod}(firstIdx + D_{fh}, \ total\_RU\_number) \qquad (1)$$

With a constant hopping distance pattern, where a UE in the same sector may have the same distance, the $D_{fh}$ can be calculated by the following equation:

$$D_{fh}=STEP*(cell\_idx+1) \qquad (2)$$

Where, the parameter of STEP in equation (2) is a basic hopping distance, which is used for a whole system, and *cell_idx* is an index number of sector. Fig. 2 denotes a frequency-hopping pattern with the same distance. Therefore, the UE may be allocated resource pairs, {1, 3}, {2, 4}, {3, 5}······, here $D_{fh}$ is 2.

With the constant hopping distance, each UE in the same cell can use the same hopping distance, thus the inter-cell interference can not be randomized.

## Summary of the Invention

In order to solve the above problems, the present invention provides a method for allocating resource to a mobile user in a mobile communication as set forth in claim 1 and a scheduler for allocating mobile communication resource as set forth in claim 3.

Within this respect, the present invention provides a random frequency hopping pattern, in which a variable hopping distance is provided among UEs in the same cell. With this pattern, the inter-cell interference can be randomized while keeping steady of interference.

Since the hoping scheme is generated randomly, the resource allocation scheme according to the present invention may randomize a resource allocation procedure among difference cells, thereby randomizing the inter-cell interference and further reducing dramatic changes of interference due to the user's movement.

## Brief Description of the Drawings

FIG 1(a) is a schematic diagram of a resource allocation without using a hopping scheme in the prior art;

FIG 1(b) is a schematic diagram of a resource allocation using a hopping scheme having a constant hopping distance in the prior art;

FIG 2 is a schematic diagram of a hopping scheme for allocating resource to UEs using a constant hopping distance;

FIG 3 is a schematic diagram of allocating resource to UEs using a variable hopping distance according to the present invention;

FIG 4 is a flowchart of a resource allocation method according to the present invention;

FIG 5 is a block diagram of a resource allocation scheduler according to the present invention; and

FIG 6 is a schematic diagram of a hopping mapping relationship according to the present invention, which has a variable hopping distance generated.

## Detailed Description of the Preferred Embodiments

In order to achieve randomization of frequency hopping, the present invention provides a mobile user resource allocation scheme, where UEs in the same cell have different hopping distances. In the following, a resource allocation method according to the preferred embodiment of the present invention will be described by referring to FIGs. 3-5.

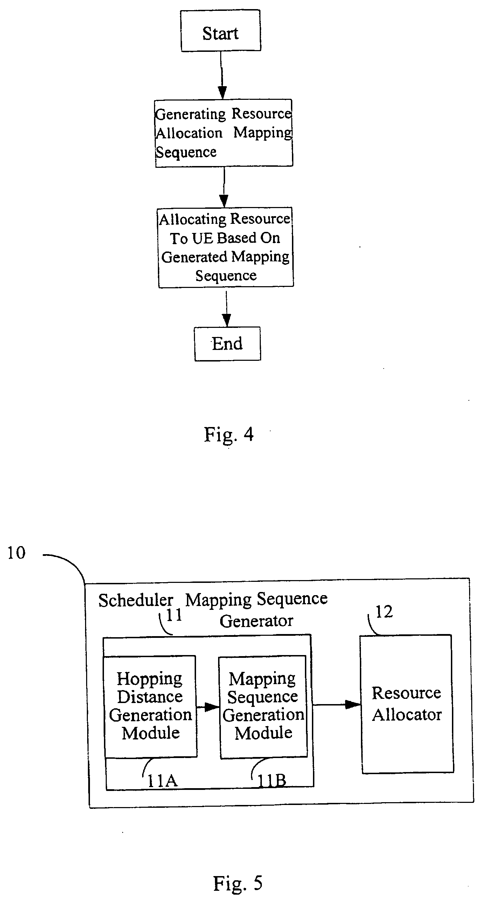

Firstly, as shown in FIG 4, in a case that channel information is unknown, a Node B firstly generates a mapping relationship sequence according to a mapping relationship sequence generation method proposed in the present invention, and then allocates resource units to each UE within a cell in which the Node B locates, based on the generated mapping relationship sequence.

As shown in FIG 5, a resource allocation scheduler 10 according to the present invention comprises a mapping sequence generator 11 and a resource allocator 12. Here, the mapping sequence generator 11 adopts the mapping relationship sequence generation method according to the present invention. The mapping sequence generator 11 comprises a hopping distance generation module 11A adapted to randomly generate a variable hopping distance; and a mapping sequence generation module 11 B adapted to generate a mapping sequence based on the generated hopping distance while removing mappings not satisfying specific conditions. This procedure will be described in detail in the following.

Similar with the conventional solution, a set of indices of the first sub-frame are set as $S_{ist}$={*firstIdx* |1, 2 , 3, 4, ···.}, which is consisted of sub-frame indices, and a set of indices of the second sub-frame is set as $S_{2nd}$= { *SecondIdx*| 1, 2, 3, 4, ···.}. When the frequency hopping scheme is applied, each UE will be allocated a resource indicator as a pair of a first sub-frame index and a second sub-frame index, {*firstIdx, SecondIdx*}. According to the FH pattern, the value of *SecondIdx* can be calculated by the following equation:

$$SecondIdx = \text{mod}(firstIdx + D_{fh}, \ total\_RU\_number) \qquad (1)$$

According to the present invention, the hopping distance $D_{fh}$ for equation (1) is:

$$D_{fh} = \text{RandomVal}.$$

.

Here, the Random Val is determined by a mapping pattern. A difference between resource pairs respectively formed by the first sub-frame and the second sub-frame, is a random variable since the mapping pattern is generated in a random sequence manner.

FIG 3 shows a mapping pattern, which is generated in the random sequence manner using the method according to the present invention. Therefore, resource pairs formed in FIG 3 are {1, 3}, {2, 12}, {3, 1}, {5, 10}....... These resource pairs are allocated using a scheduling algorithm to UEs within a cell. Hopping distances of respective resource pairs are 2, 10, -2, 5,......, respectively. Therefore, the value of the hopping distance $D_{fh}$ is a random variable.

In order to create a randomized FH, the following criteria shall be satisfied:

1) A sub-frame or sub-frame group in $S_{1st}$ has and only has one sub-frame or sub-frame group in $S_{2nd}$. That is, sub-frames or sub-frame groups in $S_{1st}$ respectively correspond to sub-frames or sub-frame groups in $S_{2nd}$.
2) RU overlap must be avoided between neighbor cells. That is, within a neighbor cell, the *same firstIdx* would be mapped to different *SecondIdx*.

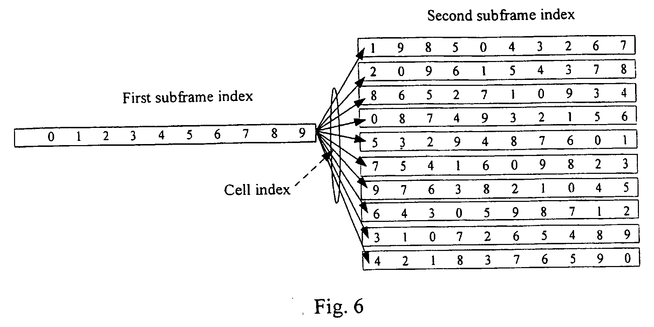

A mapping relationship is created based on the above criteria. In FIG 6, available mapping relationship random sequences are illustrated by way of an example, where mapping relationships not satisfying the above criteria are removed.

Here, assume there are ten RUs in the whole bandwidth. Ten pairs of mapping relationships are generated according to the above criteria for the mapping relationship. Each cell will be allocated one mapping relationship, and cells that are not neighboring can reuse the same mapping relationship. Each base station allocates RU resource to each UE within a cell under control of the base station based on a mapping relationship sequence of the cell. That is, the base station randomly allocates a resource pair to each UE. Assuming the mapping relationships for allocation in this cell are as shown in FIG 3, resource allocated to each UE within the cell are: {1, 3} , {2, 12}, {3, 1}, {5, 10}......,respectively.

With the mapping method according to the present invention, a variance of the inter-cell interference can be decreased. A simulation result for IoT (Interference over Thermal) will be given in the following.

Table 1 shows variances and mean values of interference under TU (Typical Urban) 30km/h. It can be seen from Table 1 that a randomized mapping pattern provides the best variance performance. Therefore, the randomized frequency hopping pattern can decrease the variation of interference, compared to the scheme without using hopping, it is 50% gain. Also, 39% gain can be obtained over the constant distance frequency hopping scheme.

Table 1 Variance and mean value of interference under TU 30km/h

| FH pattern | Variance (dB) | Mean (dBm) | Gain over w/o FH |
|---|---|---|---|
| without hopping: | 20.8008902622 | 88.2439035314 | - |
| constant hopping distance and basic step 1 | 15.6621218912 | -88.33115614 | 24.7% |
| constant hopping distance and basic step 3 | 15.4698038957 | 88.4035380568 | 25.63% |
| variable hopping distance | 9.39370874548 | 89.2119570647 | 54.84% |

**Claims**

1.  A method for allocating resource to a mobile user in a mobile communication, comprising steps of:

    generating a resource allocation mapping sequence by a base station based on a hopping scheme, which is generated randomly; and
    allocating communication resource by the base station to each UE within a cell, where the base station is present, based on the generated resource allocation mapping sequence,

**characterized in**

**that** the hopping scheme has a variable hopping distance, which is generated randomly, and that the resource allocation mapping sequence comprises indices of a first sub-frame and indices of a second sub-frame, which are obtained based on the indices of the first sub-frame and the hopping distance, with the first sub-frame and the second sub-frame belonging to the same transmission time interval TTI, and each UE is allocated a pair of a first sub-frame index and a second sub-frame index.

2.  A method as set forth in Claim 1, wherein the hopping distance is generated randomly, so that:

> 1) within a cell, each index of the first sub-frame has and only has allocated one index of the second sub-frame, respectively; and
> 2) one index of the first sub-frame is mapped to different indices of the second sub-frame for a mapping sequence of a neighbor cell.

3.  A scheduler (10) for allocating mobile communication resource, comprising:

> a resource allocation mapping sequence generator (11) adapted to randomly generate a resource allocation mapping sequence based on a hopping scheme; and
> a resource allocator (12) adapted to allocate communication resource to each UE within a cell based on the resource allocation mapping sequence generated by the resource allocation mapping sequence generator (11),
> **characterized in**
> **that** the resource allocation mapping sequence generator (11) comprises a hopping distance generation module (11A) that is adapted to randomly generate a variable hopping distance,
> and **that** the resource allocation mapping sequence generator (11) is adapted to generate a resource allocation mapping sequence including indices of a first sub-frame and indices of a second sub-frame, which are obtained based on the indices of the first sub-frame and the hopping distance, with the first sub-frame and the second sub-frame belonging to the same transmission time interval, and each UE is allocated a pair of a first sub-frame index and a second sub-frame index.

4.  A scheduler (10) as set forth in Claim 3, wherein the hopping distance generation module (11A) is adapted to randomly generate the hopping distance, so that:

> within a cell, each index of the first sub-frame has and only has allocated one index of the second sub-frame, respectively; and
> one index of the first sub-frame is mapped to different indices of the second sub-frame for a mapping sequence allocated to a neighbor cell.

**Patentansprüche**

1.  Verfahren für das Zuweisen von Ressourcen für einen Mobilfunkbenutzer in einer mobilen Gesprächsverbindung, die folgenden Schritte umfassend:

> Generieren einer Zuordnungssequenz für die Ressourcenzuweisung durch eine Basisstation auf der Grundlage eines nach dem Zufallsprinzip generierten Hoppingschemas; und
> Zuweisen der Kommunikationsressource durch die Basisstation für jedes Benutzergerät (UE) innerhalb einer Zelle, in welcher die Basisstation präsent ist, was auf der Grundlage der generierten Zuordnungssequenz für die Ressourcenzuweisung erfolgt,
> **dadurch gekennzeichnet,**
> **dass** das Hoppingschema über eine variable Hoppingdistanz verfügt, die nach dem Zufallsprinzip generiert wird, und dass die Zuordnungssequenz für die Ressourcenzuweisung Indizes eines ersten Unterrahmens und Indizes eines zweiten Unterrahmens umfasst, wobei letztere auf der Grundlage der Indizes des ersten Unterrahmens und der Hoppingdistanz gewonnen werden, wobei der erste Unterrahmen und der zweite Unterrahmen demselben Übertragungszeitintervall (TTI) angehören und jedem UE ein Paar zugewiesen wird, das gebildet wird von einem ersten Unterrahmen-Index und einem zweiten Unterrahmen-Index.

2.  Verfahren nach Anspruch 1, wobei die Hoppingdistanz nach dem Zufallsprinzip generiert wird, dergestalt, dass:

1) innerhalb einer Zelle jedem Index des ersten Unterrahmens ein und nur ein Index des zweiten Unterrahmens zugeordnet ist und umgekehrt; und

2) ein Index des ersten Unterrahmens für eine Zuordnungssequenz einer Nachbarzelle verschiedenen Indizes des zweiten Unterrahmens zugewiesen ist.

**3.** Planer (10) für das Zuweisen mobiler Kommunikationsressourcen, umfassend: einen Generator (11) von Zuordnungssequenzen für die Ressourcenzuweisung, ausgelegt dafür, um nach dem Zufallsprinzip auf der Grundlage eines Hoppingschemas eine Zuordnungssequenzen für die Ressourcenzuweisung zu generieren; und einen Ressourcenzuweiser (12), ausgelegt dafür, um jedem UE innerhalb einer Zelle Kommunikationsressourcen zuzuweisen, und zwar auf der Grundlage einer Zuordnungssequenz für die Ressourcenzuweisung, die generiert wird vom Generator (11) von Zuordnungssequenzen für die Ressourcenzuweisung,

**dadurch gekennzeichnet,**

**dass** der Generator (11) von Zuordnungssequenzen für die Ressourcenzuweisung ein Generatormodul für Hoppingdistanzen (11A) umfasst, das dafür ausgelegt ist, um nach dem Zufallsprinzip eine variable Hoppingdistanz zu generieren,

und **dass** der Generator (11) von Zuordnungssequenzen für die Ressourcenzuweisung dafür ausgelegt ist, eine Zuordnungssequenz für die Ressourcenzuweisung zu generieren, die Indizes eines ersten Unterrahmens und Indizes eines zweiten Unterrahmens umfasst, die auf der Grundlage der Indizes des ersten Unterrahmens und der Hoppingdistanz gewonnen werden, wobei der erste Unterrahmen und der zweite Unterrahmen demselben Übertragungszeitintervall angehören und jedem UE ein Paar zugewiesen wird, das gebildet wird von einem ersten Unterrahmen-Index und einem zweiten Unterrahmen-Index.

**4.** Planer (10) nach Anspruch 3, wobei das Generatormodul für Hoppingdistanzen (11A) dafür ausgelegt ist, um nach dem Zufallsprinzip die Hoppingdistanz zu generieren, dergestalt, dass:

innerhalb einer Zelle jedem Index des ersten Unterrahmens ein und nur ein Index des zweiten Unterrahmens zugeordnet ist und umgekehrt; und

ein Index des ersten Unterrahmens für eine einer Nachbarzelle zugewiesenen Zuordnungssequenz verschiedenen Indizes des zweiten Unterrahmens zugewiesen ist.

**Revendications**

**1.** Procédé d'affectation de ressources à un utilisateur mobile dans une communication mobile, comprenant les étapes suivantes :

génération d'une séquence de mappage d'affectation de ressources par une station de base en fonction d'un schéma de sauts, ledit schéma étant généré de manière aléatoire ; et

affectation des ressources de communication par la station de base à chaque équipement d'utilisateur (UE) à l'intérieur d'une cellule, où la station de base est présente, en fonction de la séquence de mappage d'affectation de ressources,

**caractérisé en ce que**

le schéma de sauts possède une distance de sauts variable, ladite distance de sauts étant générée de manière aléatoire, et la séquence de mappage d'affectation de ressources comprend des indices d'une première sous-trame et des indices d'une seconde sous-trame, lesdits indices d'une seconde sous-trame étant obtenus en fonction des indices de la première sous-trame et de la distance de sauts, la première sous-trame et la seconde sous-trame appartenant au même intervalle de temps de transmission TTI, et chaque UE se voyant affecter une paire constituée d'un indice de première sous-trame et d'un indice de seconde sous-trame.

**2.** Procédé selon la revendication 1, dans lequel la distance de sauts est générée de manière aléatoire de telle sorte que :

1) à l'intérieur d'une cellule, chaque indice de la première sous-trame possède et n'a affecté qu'un indice de la seconde sous-trame, respectivement ; et

2) un indice de la première sous-trame est mappé vers différents indices de la seconde sous-trame pour une séquence de mappage d'une cellule voisine.

**3.** Programmateur (10) pour l'affectation des ressources de communication mobile, comprenant :

un générateur de séquence de mappage d'affectation de ressources (11) adapté pour générer de manière aléatoire une séquence de mappage d'affectation de ressources en fonction d'un schéma de sauts ; et un allocateur de ressources (12) adapté pour affecter des ressources de communication à chaque UE à l'intérieur d'une cellule en fonction de la séquence de mappage d'affectation de ressources générée par le générateur de séquence de mappage d'affectation de ressources (11),

**caractérisé en ce que**

le générateur de séquence de mappage d'affectation de ressources (11) comprend un module de génération de distance de sauts (11A) qui est adapté pour générer de manière aléatoire une distance de sauts variable, et le générateur de séquence de mappage d'affectation de ressources (11) est adapté pour générer une séquence de mappage d'affectation de ressources comprenant des indices d'une première sous-trame et des indices d'une seconde sous-trame, lesdits indices d'une seconde sous-trame étant obtenus en fonction des indices de la première sous-trame et de la distance de sauts, la première sous-trame et la seconde sous-trame appartenant au même intervalle de temps de transmission, et chaque UE se voyant affecter une paire constituée d'un indice de première sous-trame et d'un indice de seconde sous-trame.

4. Programmateur (10) selon la revendication 3, dans lequel le module de génération de distance de sauts (11A) est adapté pour générer de manière aléatoire la distance de sauts, de telle sorte que :

à l'intérieur d'une cellule, chaque indice de la première sous-trame possède et n'a affecté qu'un indice de la seconde sous-trame, respectivement ; et
un indice de la première sous-trame est mappé vers différents indices de la seconde sous-trame pour une séquence de mappage affectée à une cellule voisine.

Fig. 1 (a)

Fig. 1 (b)

Fig. 2

Fig. 3

Start

Generating Resource Allocation Mapping Sequence

Allocating Resource To UE Based On Generated Mapping Sequence

End

Fig. 4

10

Scheduler Mapping Sequence Generator

11

12

Hopping Distance Generation Module

Mapping Sequence Generation Module

Resource Allocator

11A

11B

Fig. 5

Second subframe index

| | | | | | | | | | |
|---|---|---|---|---|---|---|---|---|---|
| 1 | 9 | 8 | 5 | 0 | 4 | 3 | 2 | 6 | 7 |
| 2 | 0 | 9 | 6 | 1 | 5 | 4 | 3 | 7 | 8 |
| 8 | 6 | 5 | 2 | 7 | 1 | 0 | 9 | 3 | 4 |
| 0 | 8 | 7 | 4 | 9 | 3 | 2 | 1 | 5 | 6 |
| 5 | 3 | 2 | 9 | 4 | 8 | 7 | 6 | 0 | 1 |
| 7 | 5 | 4 | 1 | 6 | 0 | 9 | 8 | 2 | 3 |
| 9 | 7 | 6 | 3 | 8 | 2 | 1 | 0 | 4 | 5 |
| 6 | 4 | 3 | 0 | 5 | 9 | 8 | 7 | 1 | 2 |
| 3 | 1 | 0 | 7 | 2 | 6 | 5 | 4 | 8 | 9 |
| 4 | 2 | 1 | 8 | 3 | 7 | 6 | 5 | 9 | 0 |

First subframe index

| 0 | 1 | 2 | 3 | 4 | 5 | 6 | 7 | 8 | 9 |
|---|---|---|---|---|---|---|---|---|---|

Cell index

Fig. 6

**EP 2 180 757 B1**

**Patent documents cited in the description**

- US 5581548 A
- CA 2537395 A1